# EUROPEAN PATENT SPECIFICATION

(11) **EP 2 036 808 B1**
(45) Date of publication and mention of the grant of the patent: **25.09.2013**
(21) Application number: 08009967.4
(22) Date of filing: 30.05.2008
(51) Int. Cl.: B62K 11/10, B62K 19/12, B62K 19/32

(54) **Motorcycle**
Motorrad
Motocyclette

(30) Priority: 14.09.2007 JP 2007239288
(43) Date of publication of application: 18.03.2009
(73) Proprietor: Yamaha Hatsudoki Kabushiki Kaisha, Shizuoka-ken Shizuoka 438-8501 (JP)
(72) Inventor: Ono, Takashi, Shizuoka-ken 438-8501 (JP); Kanou, Yasunobu, Shizuoka-ken 438-8501 (JP)
(74) Representative: Grünecker, Kinkeldey, Stockmair & Schwanhäusser

(56) References cited:
- EP-A- 0 295 799
- EP-A- 1 319 590
- EP-A- 1 647 478
- JP-A- 10 329 776

## Description

The present invention relates to a motorcycle according to the preamble part of claim 1. In particular, the present invention relates to a motorcycle having a body frame and an engine unit mounted on the body frame.

In JP-A-2002-19663, there is a scooter-type motorcycle constructed such that a body frame includes: left and right lower frames made up of pipe extending obliquely downward and rearward from a head pipe; left and right upper frames made up of pipe extending rearward from the head pipe; and a plurality of reinforcing frames for connecting these left and right frames. In this case, in order to secure sufficient frame rigidity, it is effective to widen as much as possible intervals between the left and the right upper or lower frames in a vehicle-width direction.

Incidentally, if the intervals between the left and the right upper or lower frames are widened in a vehicle-width direction in order to enhance the frame rigidity, there is such a problem that the size of the whole vehicle in a vehicle-width direction becomes large, which widens a seat width and makes it difficult for a rider to put his or her feet on the ground stably.

EP 0 295 799 A2 discloses a motorcycle which is readable on the preamble part of claim 1.

JP 10329776 discloses a scooter-type motorcycle with a main frame formed of left and right frame sections. Said left and right frame sections are connected via left and right engine brackets and respective fastening members to the engine so as to partly overlap said engine.

In EP 1 647 478 A1, lower sections of left and right frame pieces in the area of left and right pivots slightly overlap with the engine unit.

In view of the foregoing, it is an objective of the present invention to provide a motorcycle which can restrict the size of the body frame in a vehicle-width direction from increasing and enhance frame rigidity.

According to the present invention, said objective is solved by a motorcycle having the combination of features of independent claim 1.

Preferably, the left and right side wall sections comprise at least a lateral surface which borders the left and right side wall sections in width direction of the motorcycle, respectively, and which is substantially flat.

Further, preferably rear portions of the left and the right side wall sections cover at least a portion of a cylinder head of the engine unit from the left and/or the right side, and upper and lower edges of the left and the right side wall sections are respectively positioned above and below the cylinder head of the engine unit when viewed from the lateral side of the motorcycle.

Still further, preferably portions in proximity to upper and lower edges of a rear end of the left and right side wall sections are connected to the engine unit.

According to a preferred embodiment, a plurality of ribs extending inwardly in width direction of the motorcycle are formed on the left and the right side wall sections.

According to another preferred embodiment, the ribs include upper and lower edge ribs respectively extending inwardly in width direction of the motorcycle from upper and lower edges of the left and the right side wall sections, the upper edge rib being formed longer than the lower edge rib.

Preferably, the left and the right side wall sections have at least an opening and at least a peripheral edge rib extending inwardly in width direction of the motorcycle and which is formed on the periphery of the opening.

Further, preferably front portions of the left and the right side wall sections positioned in moving direction of the motorcycle forward of a cylinder head of the engine unit cover at least a portion of an air cleaner of an intake system, which is connected to the cylinder head, from the left and/or the right side.

Still further, preferably in the front portions of the left and the right side wall sections, upper and lower ribs are formed respectively extending inwardly in width direction of the motorcycle from upper edges and lower edges of the front portions and further extending upwardly and downwardly from inner edges thereof.

Yet further still, preferably connecting portions of the left and the right side wall sections connected to the head pipe have top and bottom wall sections respectively extending inwardly in width direction of the motorcycle from upper edges and lower edges of the left and the right side wall sections, the connecting portions being formed in a generally cylindrical shape in lateral cross section.

Preferably, the head pipe and/or the left and the right frame sections are formed by casting.

Further, preferably the head pipe includes left and right head pipe halves integrally formed with the left and the right frame sections, the left and right head pipe halves being coupled together by bolts, wherein left and right first coupling boss sections and second coupling boss sections are formed respectively on front and rear edges of the left and right head pipe halves so as to be coupled together by the bolts.

Still further, preferably third coupling boss sections are formed at portions spaced rearwardly in moving direction of the motorcycle from the second coupling boss sections of the left and right side wall sections and coupled together by at least a further bolt (69) such that portions from the third coupling boss sections of the left and the right side wall sections to the head pipe form a generally square cylindrical shape in lateral cross section.

According to a preferred embodiment, left and right cover members are disposed on sides of the left and the right side wall sections, a space between the left and the right side wall sections and the left and the right cover members being defined as wind introduction passage for introducing a headwind to the engine unit, wherein at least a wind introduction member for guiding said headwind introduced into the wind introduction passage to the engine unit is disposed in said space between the left and the right side wall sections and the left and the right cover members, said wind introduction member being attached to inner surfaces of the left and the right cover members.

According to another preferred embodiment, upper and lower edges of the left and the right side wall sections are coupled together by at least a cross member extending in width direction of the motorcycle, the engine unit is fixed to the body frame such that an axis of a cylinder of said engine unit is directed generally horizontally, and footrests are disposed on the left and right sides of said cylinder.

In the following, the present invention is explained in greater detail by means of embodiments thereof in conjunction with the accompanying drawings, wherein:
- FIG. 1: is a side view of a motorcycle according to an embodiment,
- FIG. 2: is a plan view of the motorcycle,
- FIG. 3: is a side view of a rear frame section including a storage box of the motorcycle,
- FIG. 4: is a side view of a front frame section of the motorcycle,
- FIG. 5: is a side view of a head pipe formed integrally with the front frame section,
- Fig. 6: is a sectional view of the head pipe (taken along the line VI-VI in Fig. 5),
- Fig. 7: is a sectional view of the head pipe (taken along the line VII-VII in Fig. 5),
- Fig. 8: is a sectional view of the head pipe (taken along the line VIII-VIII in Fig. 5),
- Fig. 9: is a sectional view of the head pipe (taken along the line IX-IX in Fig. 5),
- FIG. 10: is a sectional view of a connecting portion of the front frame section connected to the head pipe (taken along the line X-X in Fig. 5),
- FIG. 11: is a sectional view of the front frame section (taken along the line XI-XI in Fig. 4),
- FIG. 12: is a sectional view of the front frame section (taken along the line XII-XII in Fig. 4),
- FIG. 13: is a plan view of a cross member of the front frame section,
- FIG. 14: is a sectional view of the cross member (taken along the line XIV-XIV in Fig. 13),
- FIG. 15: is a sectional view of an engine suspension part of the front frame section (taken along the line XV-XV in Fig. 4),
- FIG. 16: is a sectional view of the engine suspension part of the front frame section (taken along the line XVI-XVI in Fig. 4),
- FIG. 17: is a sectional view of an engine suspension part of the rear frame section (taken along the line XVII-XVII in Fig. 4), and
- FIG. 18: is a sectional view of the cross member of the front frame section (taken along the line XVIII-XVIII in Fig. 4).

Among others, the following reference signs are used in the Figures:
1: motorcycle
2: body frame
3: head pipe
3a: left, right head pipe half
3b: front coupling boss section
3c: rear coupling boss section
3d, 3e: separated coupling boss section
7: engine unit
7c: cylinder head
12: left, right front frame section
12a: left, right side wall section
12a', 12a": upper edge, lower edge
12b: top wall section
12c: bottom wall section
12d, 12e: opening
12f: upper edge rib
12g: lower edge rib
12h: upper rib
12i: lower rib
12j, 12k: peripheral rib
12m, 12n: suspension boss section
16: leg shield (left, right cover member)
24: air cleaner
60: upper cross member
72: lower cross member
74: wind introduction passage
75: wind introduction member

Hereinafter, an embodiment of the motorcycle is described with reference to the attached drawings.

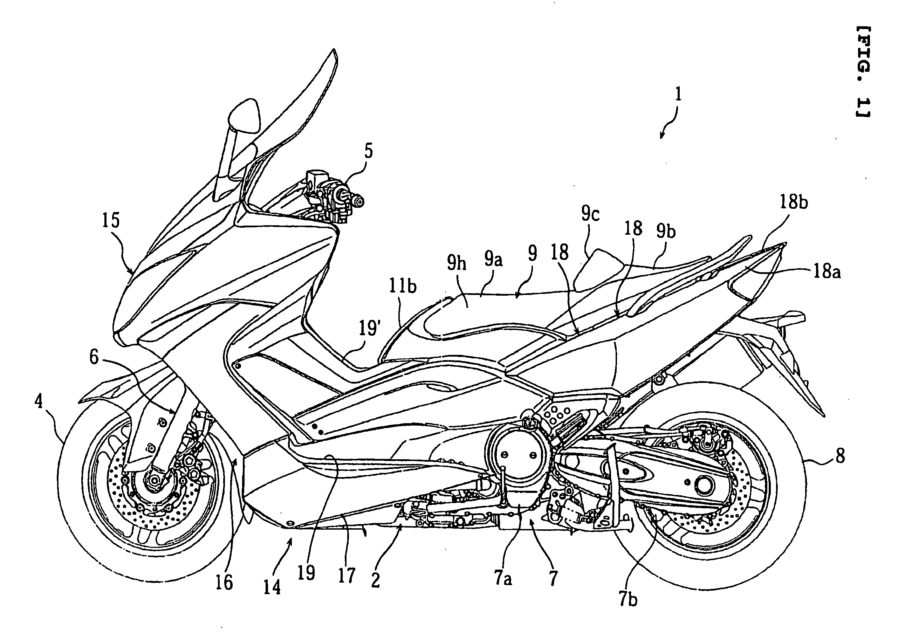

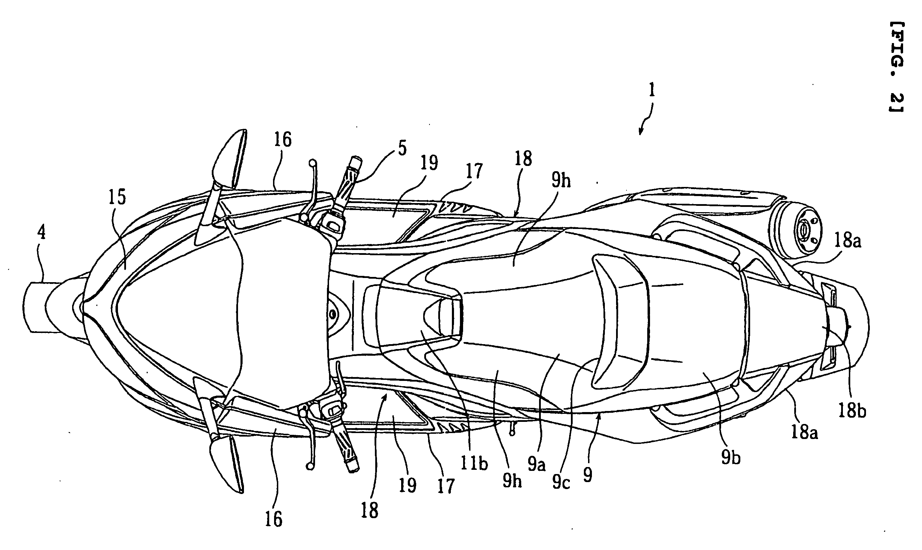

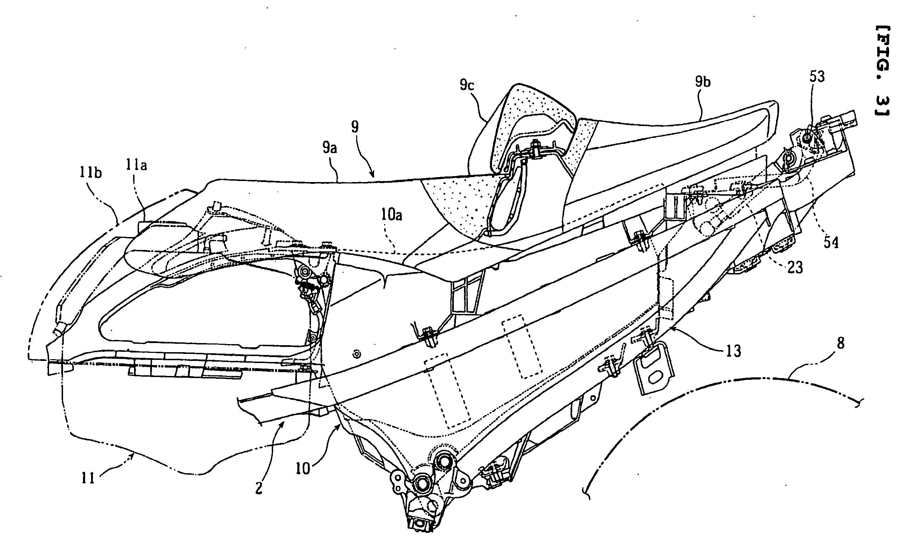

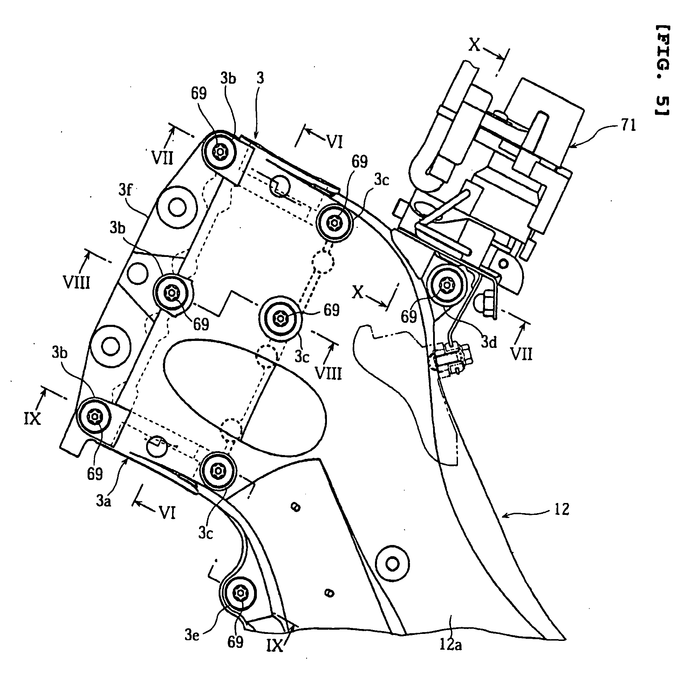

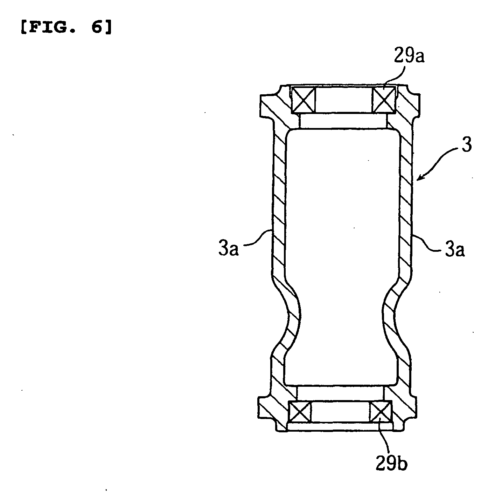

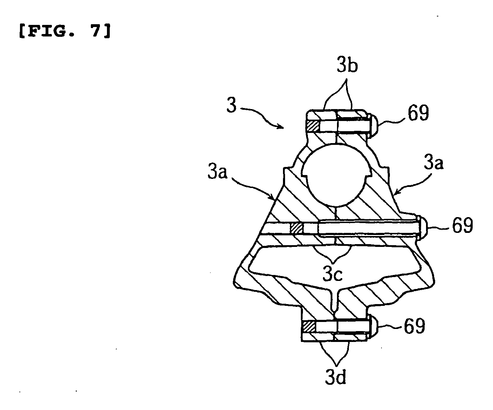

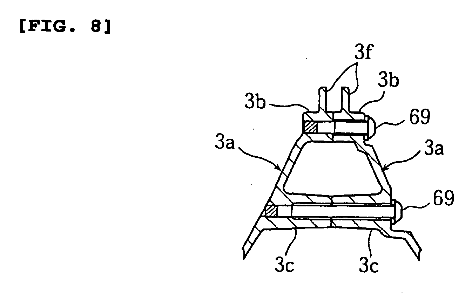

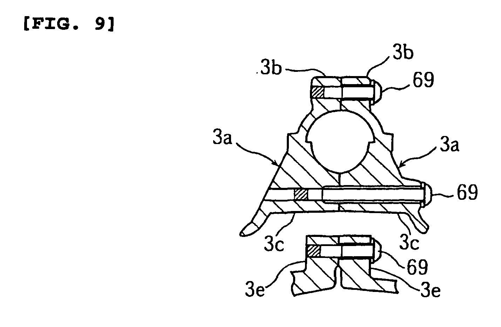

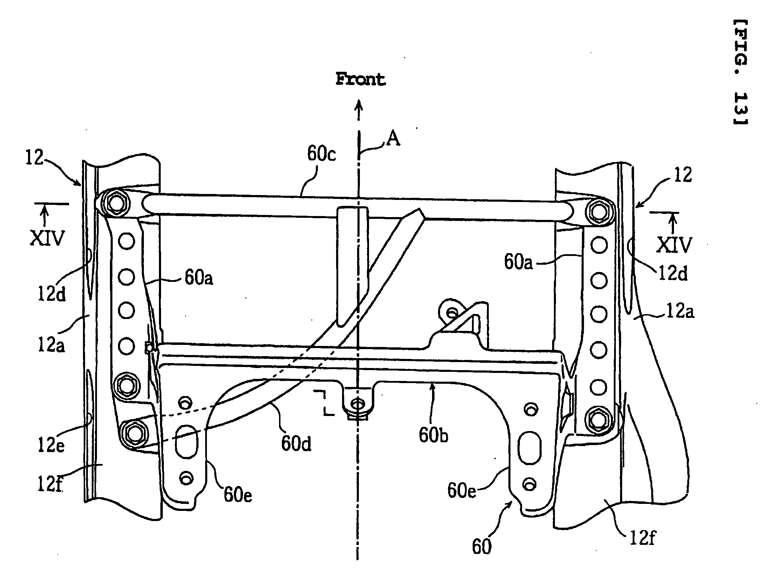

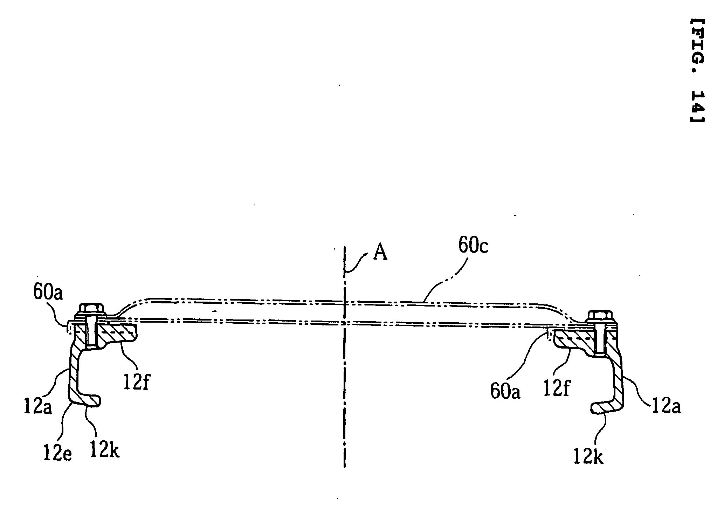

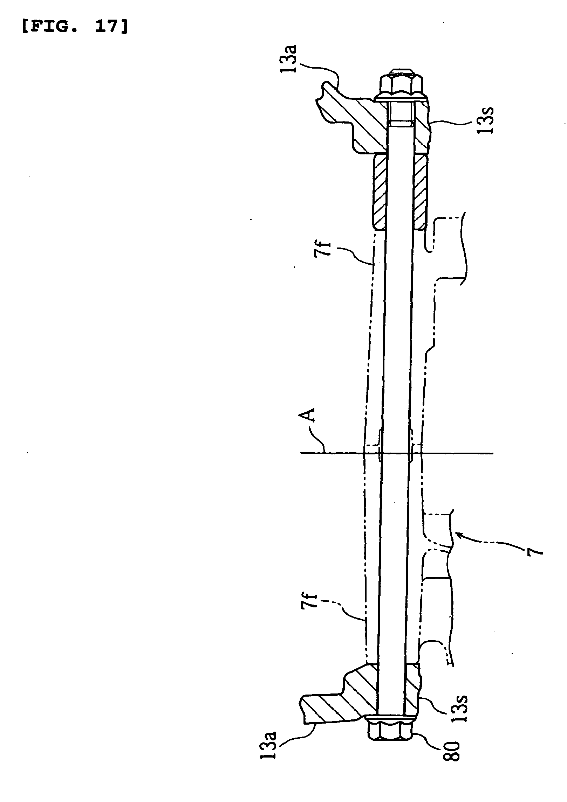

FIGs. 1 to 18 are drawings for illustrating a motorcycle according to an embodiment. The terms front and rear, and left and right used in the embodiment refer to those viewed from a seated rider unless otherwise specified.

In the figures, numeral 1 denotes a scooter type motorcycle. The motorcycle 1 includes: an underbone type body frame 2; a front fork 6 supported by a head pipe 3 positioned at the front end of the body frame 2 for steering left and right, the front fork 6 having a front wheel 4 at its lower end and a handlebar 5 at its upper end; an engine unit 7 mounted on the center of the body frame 2 in a longitudinal direction, the engine unit 7 having a rear wheel 8 at its rear end; and a seat 9 for two passengers mounted on an upper part of the engine unit 7 on the body frame 2.

The body frame 2 includes the head pipe 3, left and right front frame sections 12, 12 extending obliquely rearward and downward from the head pipe 3, and left and right rear frame sections 13, 13 extending obliquely rearward and upward from the left and right front frame sections 12.

The engine unit 7 includes an engine body 7a fixedly supported by the body frame 2, and a transmission case 7b pivotally supported by the rear end of the engine body 7a for transmitting an engine power to the rear wheel 8 rotatably supported by the rear end of the engine body 7a. The engine body 7a has a general structure such that a front wall cylinder body 7e of a crankcase 7d and a cylinder head 7c are stacked. The engine body 7a is fixed on the body frame 2 in such a manner that an axis (cylinder axis) of the cylinder body 7e is directed generally horizontally.

The body frame 2 is surrounded by a vehicle body cover 14 made of resin. The vehicle body cover 14 includes: a front cover 15 for covering left, right and front sides of the front fork 6; a leg shield 16 disposed at the rear of the front cover 15 for covering a part in front of a rider's leg; left and right side covers 18, 18 for covering a surrounding part below the seat 9 and left and right sides of the engine body 7a; and left and right under covers 17, 17 for covering lower sides of the side covers 18.

Low-height left and right footboards 19, 19 forming footrests for a rider are disposed between the left and the right side covers 18 and the left and the right under covers 17. A part of the vehicle body cover 14 between the left and the right footboards 19, 19 swells upward in a tunnel shape to form a center tunnel section 19'.

Here, the left and the right footboards 19, 19 are positioned in the left and the right sides of the cylinder body 7e and the cylinder head 7c of the engine body 7a.

The seat 9 is integrally formed with a front seat 9a for the rider and a rear seat 9b for a tandem rider. On a boundary between the front seat 9a and the rear seat 9b, a backrest 9c is disposed for supporting a hip of the rider. A rear end of the seat 9 is pivotally supported around a support shaft 53 via a bracket 54 to open or close an opening 10a of a storage box 10 disposed below. A damper 23 is disposed between the seat 9 and the rear frame section 13.

A fuel tank 11 is disposed in front of the storage box. A fuel cap 11 a of the fuel tank 11 is opened or closed by a lid 11 b.

The head pipe 3 and the left and the right front frame sections 12, 12 are integrally formed by casting. The left and the right front frame sections 12, 12 have wide left and the right side wall sections 12a, 12a extending in a longitudinal direction of the vehicle and in a vertical direction. The head pipe 3 has left and right head pipe halves 3a, 3a connected to and formed integrally with the left and the right side wall sections 12a, 12a. The left and the right head pipe halves 3a, 3a are coupled together by bolting as described later.

Steering shafts (not shown) of the front fork 6 are inserted into the left and the right head pipe halves 3a, 3a and supported on the head pipe 3 via upper and lower bearings 29a, 29b for steering left and right.

Left and right front coupling boss sections (first coupling boss sections) 3b, 3b are formed at front edges of the left and the right head pipe halves 3a, 3a. Left and right rear coupling boss sections (second coupling boss sections) 3c, 3c are formed at rear edges. The front coupling boss section 3b and the rear coupling boss section 3c are respectively formed at three locations in both ends and a center in a vertical direction of the left and the right head pipe halves 3a.

Left and right upper separated coupling boss sections (third coupling boss sections) 3d, 3d are formed to protrude upward at upper edges of parts spaced rearward from the left and the right rear coupling boss sections 3c of the left and the right side wall sections 12a, 12a. Also, at lower edges, left and right lower separated coupling boss sections (third coupling boss sections) 3e, 3e are formed to protrude downward.

Each pair of the left and the right front coupling boss sections 3b, 3b, the left and the right rear coupling boss sections 3c, 3c, the left and the right upper separated coupling boss sections 3d, 3d, and the left and the right lower separated coupling boss sections 3e, 3e is tightened by coupling bolts 69.

Left and right flange sections 3f, 3f are formed to protrude forward at the front edges of the left and the right head pipe halves 3a. An attachment frame (not shown) for electrical components is attached to the flange section 3f.

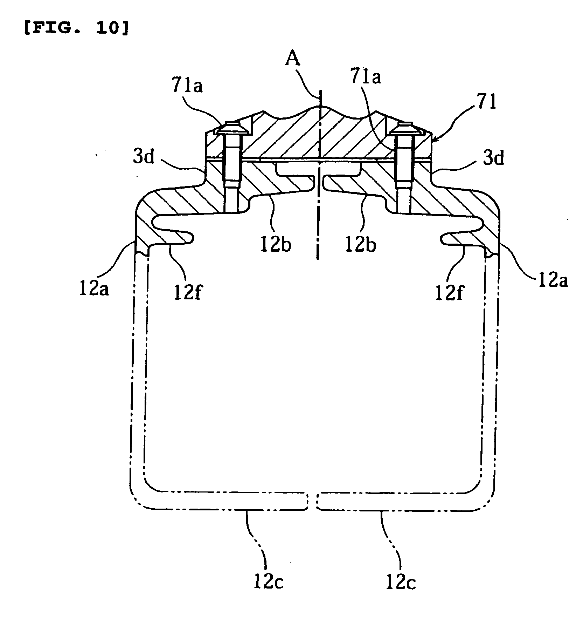

Connecting portions of the left and the right side wall sections 12a, 12a and the head pipe half 3a extend inward in a vehicle-width direction from the upper edges and lower edges of the left and the right side wall sections 12a, 12a to come close to each other and have left and right top wall sections 12b, 12b and left and right bottom wall sections 12c, 12c, both of which are facing each other with narrow gaps, the connecting portions having a square cylindrical cross section (see FIG. 10). More specifically, a part from the separated coupling boss sections 3d, 3e of the side wall section 12a to the rear coupling boss section 3c of the head pipe half 3a is shaped in a square cylinder in cross section.

A main switch 71 is fixed on the upper surfaces of the left and the right upper separated coupling boss sections 3d, 3d by a plurality of bolts 71 a.

The left and the right side wall sections 12a, 12a cover the cylinder head 7c and the cylinder body 7e of the engine unit 7 from the left and the right sides and cover an air cleaner 24 disposed forward of the engine unit 7 from the left and the right sides.

Front openings 12d, 12d are formed on parts of the left and the right side wall sections 12a, 12a facing a rear part of the air cleaner 24. Rear openings 12e, 12e are formed on parts facing the cylinder head 7c. In this embodiment, covering the cylinder head 7c from the left and the right sides by the left and the right side wall sections 12a, 12a includes a case that a relatively large opening 12d as described above is formed and the cylinder head 7c is seen from the external when viewed from a lateral side of the vehicle.

The front and the rear openings 12d, 12e have a relatively large opening area extending both in longitudinal and vertical directions. The front opening 12d is utilized for maintaining an intake system including the air cleaner 24. The rear opening 12e is utilized for maintaining around the cylinder head 7c.

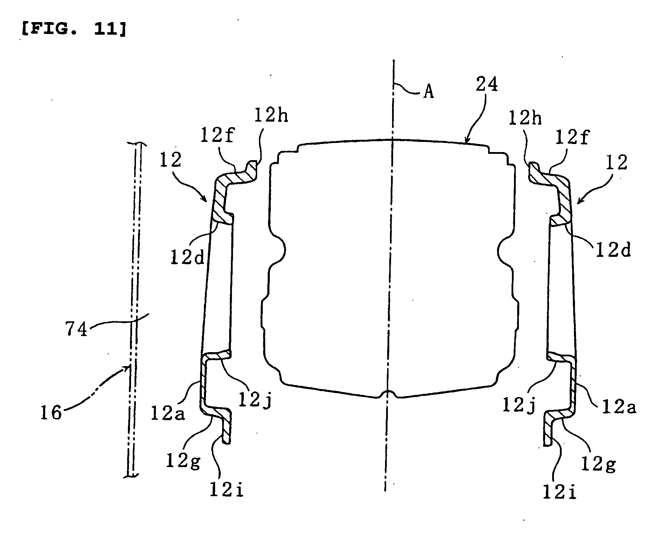

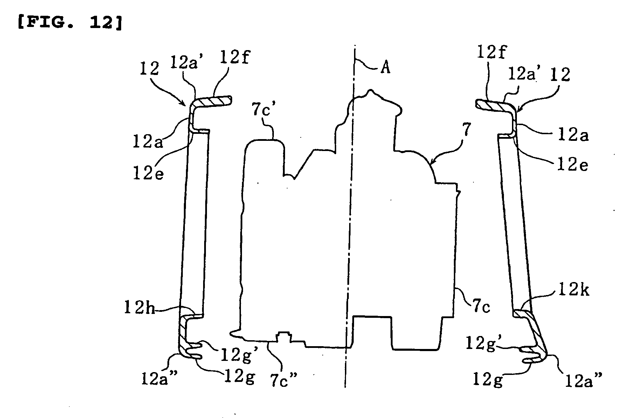

Here, upper edges 12a' of the left and the right side wall sections 12a, 12a are positioned higher than an upper edge 7c' of the cylinder head 7c, and lower edges 12a" are positioned lower than a lower edge 7c" of the cylinder head 7c, when viewed from a lateral side of the vehicle. On the upper edges 12a'and the lower edges 12 a" of the left and the right side wall sections, upper edge ribs 12f, 12f and lower edge ribs 12g, 12g respectively extending inward in a vehicle width direction are formed generally along the whole length thereof in a longitudinal direction (see FIGs. 11 and 12).

In parts of the upper edge rib 12f and the lower edge rib 12g, which face the air cleaner 24, upper ribs 12h, 12h and lower ribs 12i, 12i are formed to extend continuously from inner edges of the left and the right upper edge ribs 12f and the lower edge ribs 12g respectively upward or downward after bending. Incidentally, the lower rib 12i is formed longer than the upper rib 12h.

In parts of the lower edges 12a", which face the cylinder head 7c, additional lower edge ribs 12g' are formed to become a double rib. In the part facing the cylinder head, the upper edge rib 12f is formed longer than the lower edge rib 12g.

On peripheries of the front and the rear openings 12d, 12e of the left and the right side wall sections 12a, 12a, front peripheral ribs 12j and rear peripheral ribs 12k respectively extending inward in a vehicle-width direction are formed. Each of the front peripheral rib 12j and the rear peripheral rib 12k is formed shorter than the upper edge rib 12f.

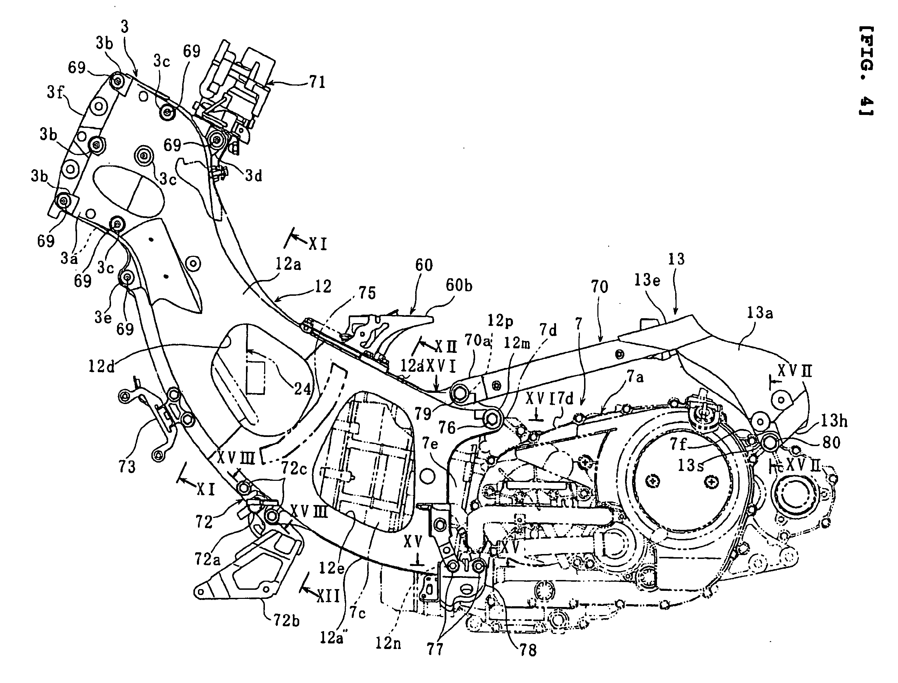

Upper parts of the upper edges of the left and the right side wall sections 12a, 12a located above the cylinder head 7c are interconnected by an upper cross member 60 extending in a vehicle-width direction (see Figs. 4, 13 and 14). The upper cross member 60 includes: left and right leg sections 60a, 60a fixed on upper surfaces of the left and the right upper edges 12f by bolting; a cross body 60b rising from the leg section 60a and extending upward for interconnecting rear ends of the left and the right leg sections 60a, 60a integrally; a cross pipe 60c for interconnecting front ends of the left and the right leg sections 60a, 60a; and a connecting pipe 60d for connecting a center of the cross pipe 60c in a vehicle-width direction and a rear end of the left leg section 60a.

Left and right front ends of the fuel tank 11 are respectively fixed to left and right ends 60e, 60e of the cross body 60b by bolts.

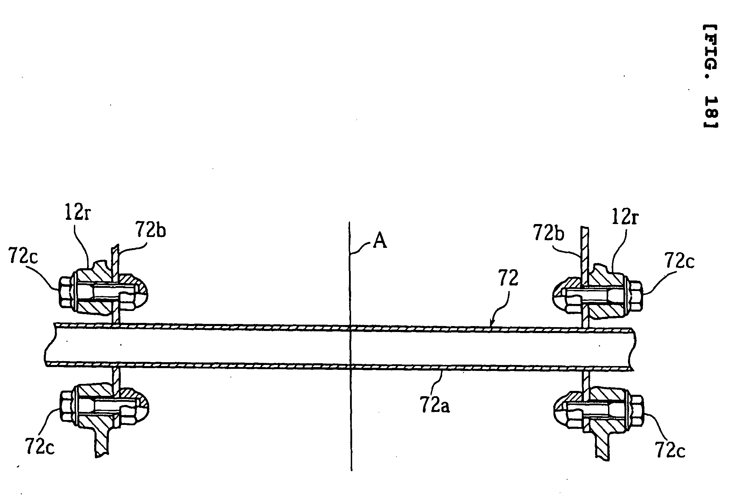

Lower parts of the lower edges of the left and the right side wall sections 12a, 12a located below the cylinder head 7c are interconnected by an lower cross member 72 extending in a vehicle-width direction (see Figs. 4 and 18). The lower cross member 72 includes a lower cross pipe 72a extending in a vehicle-width direction and left and the right radiator brackets 72b, 72b made of sheet metal and jointed by welding to both ends of the lower cross pipe 72a. The left and the right radiator brackets 72b are fixed to left and the right lower edge boss sections 12r of the left and the right side wall sections 12a, 12a by pairs of front and rear bolts 72c, 72c. Also, left and right footrest brackets 73, 73 are fixed on front sides of the left and the right radiator brackets 72b of the left and the right side wall sections 12a, 12a by bolting.

The left and the right side wall sections 12a, 12a are covered with the leg shield (left and right cover members) 16. A space between the left or the right side wall sections 12a, 12a and the leg shield 16 defines a wind introduction passage 74 for introducing a headwind to the engine unit 7 (see FIG. 11).

A wind introduction member 75 including a sponge etc. is disposed in the wind introduction passage 74 for guiding a headwind introduced into the wind introduction passage 74 from the forward of the vehicle from the front opening 12d through the rear side of the air cleaner 24 to the engine unit 7 (see FIG. 4). The wind introduction member 75 is attached to an inner wall of the leg shield 16 with an adhesive or the like so as to surround a rear edge of the front opening 12d.

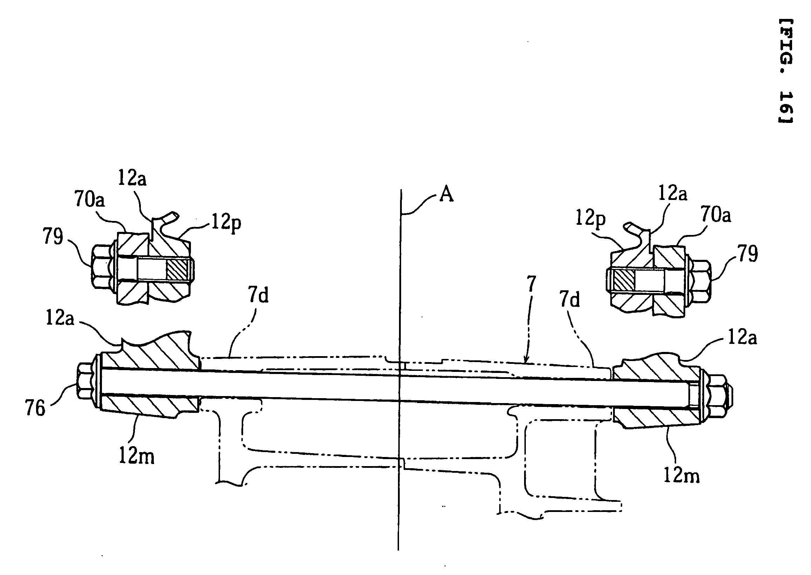

Left and right upper suspension boss sections 12m, 12m are formed at upper rear end edges of the left and the right side wall sections 12a, 12a. Upper suspension sections 7d formed on an upper wall of the crankcase of the engine unit 7 are connected to the left and the right upper suspension boss sections 12m by bolts 76 (see FIG. 4 and 16). The upper suspension section 12m is disposed more rearward than a connection boss section 12p.

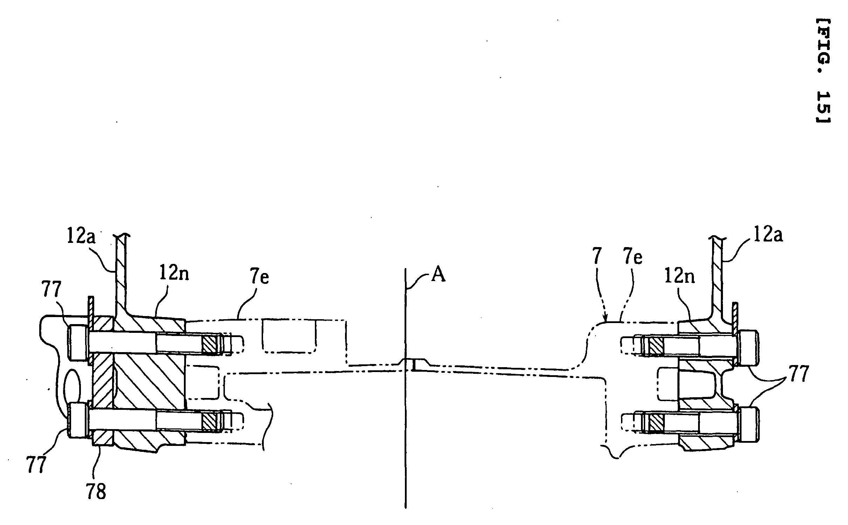

Left and right lower suspension boss sections 12n, 12n are formed at lower rear end edges of the left and the right side wall sections 12a, 12a. Lower suspension sections 7e formed on a bottom wall of the crankcase of the engine unit 7 are connected to the left and the right lower suspension boss sections 12n by pairs of front and rear bolts 77, 77 (see FIG. 4 and 15).

On the outside of the left lower suspension boss section 12n, a side stand bracket 78 is fixed together therewith by the bolts 77.

Thus, the left and the right frame sections 12 and the left and the right rear frame sections 13 are connected by interposing the engine unit 7 therebetween. As a result, the engine unit 7, which is a rigid body, is utilized as a part of the body frame 2.

According to the embodiment, the left and the right front frame sections 12 extending obliquely downward rearward from the head pipe 3 have the left and the right side wall sections 12a, 12a extending in a longitudinal direction of the vehicle and in a vertical direction. Therefore, the left and the right side wall sections 12a, 12a have relatively wide surfaces extending in a longitudinal direction and in a vertical direction and thereby enhance surface rigidity of the left and the right side wall sections 12a, 12a. Accordingly, frame rigidity can be secured without widening an interval between the left and the right frame sections 12, 12 in a vehicle-width direction. As a result, the size in a vehicle-width direction of a part of the vehicle in which the cylinder body 7d and the cylinder head 7c are disposed can be reduced. Because the footboards 19, 19 are disposed in the part that can be reduced in size in a vehicle-width direction, flexibility in arranging the foot board can be enhanced. Further, size reduction in a vehicle-width direction makes the seat width smaller and allows the rider to put his or her feet on the ground more stably.

Also, the left and the right side wall sections 12a, 12a are disposed in the left and the right sides of the cylinder head 7c of the engine unit 7. Therefore, the engine unit 7 can be supported by the left and the right side wall sections 12a, 12a having a high rigidity, thereby enhancing the supporting rigidity of the engine unit 7.

In this embodiment, the engine unit 7 is suspended and supported by the upper suspension boss sections 12m and the lower suspension boss sections 12n respectively formed at the upper and the lower edges of the rear end of the left and the right side wall sections 12a, 12a having a high rigidity. Thereby, the supporting rigidity of the engine unit 7 can be enhanced.

In this embodiment, the upper edge rib 12f and the lower edge rib 12g are respectively formed on the upper edge 12a'and the lower edge 12a" of the left and the right side wall sections 12a, 12a. Therefore, torsional rigidity of the left and the right side wall sections 12a, 12a can be enhanced without widening an interval between the left and the right side wall sections 12a, 12a in a vehicle-width direction.

In the left and the right frames 12, 12 of this embodiment, a larger torsion load and bending load work thereon by the upper edges of the left and the right side wall sections 12a, 12a. In this embodiment, the upper edge rib 12f is formed longer than the lower edge rib 12g. This prevents the weight from increasing and enhances torsional rigidity of the left and the right side wall sections 12a, 12a.

The left and the right sides of the cylinder head 7c are covered by the rear part of the left and the right side wall sections 12a, 12a. Thereby, engine auxiliaries such as sensors or couplers disposed around the cylinder head 7c can be protected from the external force.

Also, the left and the right sides of the air cleaner 24 are covered by the left and the right side wall sections 12a, 12a. Thereby, the intake system including the air cleaner 24 can be protected from the external force.

Further, in this embodiment, the front and the rear openings 12d, 12e are formed to have a relatively large opening area extending both in longitudinal and vertical directions. Therefore, the front and rear openings 12d, 12e can be utilized for maintaining the air cleaner 24 and the engine unit 7 and weight reduction of the frame can be achieved.

In this case, because the front and the rear peripheral ribs 12j, 12k are formed on the peripheries of the front and the rear openings 12d, 12e respectively extending inward in a vehicle-width direction, decrease of frame rigidity can be prevented.

In this embodiment, the upper and the lower ribs 12h, 12i are formed to extend upward or downward continuously from inner edges of the upper and the lower edge ribs 12f, 12g of the left and the right side wall sections 12a, 12a. Therefore, rigidity of the proximal portion of the head pipe 3 on which a large load of the left and the right front frame sections 12 applies can be enhanced.

In this embodiment, the top and the bottom wall sections 12b, 12c are formed on the connecting portions of the left and the right side wall sections 12a, 12a connected to the head pipe 3 to extend inward in a vehicle-width direction respectively from the upper and the lower edges of the left and the right side wall sections 12a, 12a so that the connecting portions have a square cylindrical cross section. Therefore, rigidity of the immediately proximal portion of the head pipe 3 on which a largest load of the left and the right front frame sections 12 applies can be enhanced.

In this embodiment, the head pipe 3 and the left and the right front frame sections 12 are integrally formed by casting, thereby facilitating manufacturing thereof and reducing the parts number.

Also, the head pipe 3 is formed by the left and the right halves 3a, 3a integrally formed and connected to the left and the right front frame sections 12, the left and the right halves 3a being coupled by bolting. This facilitates manufacturing of the head pipe and reduces the parts number.

The left and the right front coupling boss sections 3b and the left and the right rear coupling boss sections 3c, which are respectively formed at front and the rear edges of the left and the right head pipe halves 3a, are coupled together by the coupling bolts 69. Therefore, coupling strength of the left and the right head pipe halves 3a can be secured. Also, alignment precision between the left and the right head pipe halves 3a can be enhanced compared to the coupling by welding.

The upper and the lower separated coupling boss sections 3d, 3e are formed at the upper and the lower edges of parts spaced rearward from the left and the right rear coupling boss sections 3c of the left and the right side wall sections 12a, 12a and coupled together by the bolts 69 so that a part from the upper and the lower separated coupling boss sections 3d, 3e to the rear coupling boss sections 3c forms the square cylindrical shape. Therefore, rigidity of the immediately proximal portion of the head pipe 3 on which a largest load of the left and the right front frame sections 12 applies can be enhanced.

In this embodiment, the leg shield 16 is disposed on the outside of the left and the right side wall sections 12a, 12a and spaces between the leg shield 16 and the left and the right side wall sections 12a, 12a are defined as the wind introduction passages 74 for introducing a headwind to the engine unit 7. Therefore, the space is utilized to form the wind introduction passage 74 and thereby enhancing cooling efficiency of the engine unit 7.

Also, the wind introduction member 75 is disposed in the wind introduction passage 74 for guiding a headwind introduced into the wind introduction passage 74 from the front opening 12d to the engine unit 7. Therefore, cooling wind to the engine unit 7 can be intensified and thereby further enhancing cooling efficiency of the engine unit 7.

The wind introduction member 75 is attached to an inner wall surface of the leg shield 16 with an adhesive or the like. Thereby, a simple attachment configuration can be realized.

In this embodiment, the upper and the lower edges of the left and the right side wall sections 12a, 12a are respectively connected together with the upper and the lower cross members 60, 72 extending in a vehicle-width direction. Therefore, rigidity of the left and the right front frames 12 in a vehicle-width direction can be enhanced.

The upper and the lower cross members 60, 72 having a high rigidity can also be utilized to mount the heavyweight fuel tank 11 and radiator (not shown) thereon.

In the embodiment, the left and the right head pipe halves 3a are formed integrally with the left and the right side wall sections 12a, 12a. However, in this prevention, the head pipe may be formed integrally with either of the left and the right side wall sections.

The description above discloses (amongst others) an embodiment of a motorcycle comprising: a body frame; an engine unit fixed on the body frame so that an axis of a cylinder is directed generally horizontally; and left and right footrests disposed in a left and a right side of the cylinder, wherein the body frame includes a head pipe and left and right frame sections extending from the head pipe, the left and the right frame sections include left and right side wall sections extending in a longitudinal direction of the vehicle and in a vertical direction, and the left and the right side wall sections are disposed in the left and the right sides of the engine unit and have parts which overlap the engine unit when viewed from the lateral side of the vehicle.

In the motorcycle according to said embodiment, the left and the right frame sections have the left and the right side wall sections extending in a longitudinal direction of the vehicle and in a vertical direction. Therefore, the left and the right side wall sections have wide surfaces extending in a longitudinal direction and in a vertical direction. Thereby, surface rigidity of the left and the right side wall sections can be enhanced, which secures frame rigidity without widening an interval between the left and the right frame sections in a vehicle-width direction. As a result, the size in a vehicle-width direction of a part of the vehicle in which the cylinder is disposed can be reduced. A footrest for a rider is disposed in a side of the part whose size in a vehicle-width direction can be reduced, thereby increasing layout flexibility of the footrest.

Also, the left and the right side wall sections are disposed on the left and the right sides of the engine unit. This allows the left and the right side wall sections with high rigidity to support the engine unit, thereby enhancing rigidity for supporting the engine unit.

More generally, the description discloses an embodiment of a motorcycle, in particular a scooter type motorcycle, comprising a body frame and an engine unit fixed to the body frame, the body frame including a head pipe and left and right frame sections extending from the head pipe, wherein the left and the right frame sections include left and right side wall sections extending in a longitudinal direction and/or in a vertical direction of the motorcycle, and the left and the right side wall sections are disposed on left and right sides of the engine unit and have at least a portion which overlaps at least a portion of the engine unit when viewed from a lateral side of the motorcycle.

Therein, preferably the left and right side wall sections comprise at least a lateral surface which borders the left and right side wall sections in width direction of the motorcycle, respectively, and which is substantially flat.

Preferably, rear parts of the left and the right side wall sections cover at least a cylinder head part of the engine unit from the left and the right sides.

Further, preferably upper and lower edges of the left and the right side wall sections are respectively positioned above and below the cylinder head when viewed from the lateral side of the vehicle.

According to a preferred aspect, parts in proximity to the upper and lower edges of the rear end of the left and right side wall sections are connected to the engine unit.

Still further, preferably a plurality of ribs extending inward in a vehicle-width direction are formed on the left and the right side wall sections.

Preferably, the rib includes upper and lower edge ribs respectively extending inward in a vehicle-width direction from upper and lower edges of the left and the right side wall sections.

According to another preferred aspect, the upper edge rib is formed longer than the lower edge rib.

Preferably, the left and the right side wall sections have an opening and the rib includes a peripheral edge rib extending inward in a vehicle-width direction formed on the periphery of the opening.

According to another preferred aspect, parts of the left and the right side wall sections positioned forward of the cylinder head cover at least an air cleaner part of an intake system connected to the cylinder head from the left and the right sides.

Further, preferably in front parts of the left and the right side wall sections, upper and lower ribs are formed respectively extending inward in a vehicle-width direction from the upper edges and lower edges of the front parts and further extending upward and downward from inner edges thereof.

According to another preferred aspect, connecting portions of the left and the right side wall sections connected to the head pipe have top and bottom wall sections respectively extending inward in a vehicle-width direction from the upper edges and the lower edges of the left and the right side wall sections, the connecting portions being formed in a generally cylindrical shape in lateral cross section.

According to another preferred aspect, the head pipe and the left and the right frame sections are formed by casting.

According to a still further preferred aspect, the head pipe includes left and right head pipe halves integrally formed with the left and the right frame sections, and the left and the right head pipe halves are coupled together by bolts.

Preferably, left and right first coupling boss sections and second coupling boss sections are formed respectively on front and rear edges of the left and the right head pipe halves and coupled together by bolting.

Further, preferably third coupling boss sections are formed at parts spaced rearward from the second coupling boss sections of the left and right the side wall sections and coupled together by bolting so that parts from the third coupling boss sections of the left and the right side wall sections to the head pipe forms a generally square cylindrical shape in lateral cross section.

According to another preferred aspect, left and right cover members are disposed on sides of the left and the right side wall sections and a space between the left and the right side wall sections and the left and the right cover members are defined as wind introduction passages for introducing a headwind to the engine unit.

Preferably, wind introduction members for guiding a headwind introduced into the wind introduction passages to the engine unit are disposed in the space between the left and the right side wall sections and the left and the right cover members.

Further, preferably the wind introduction member is attached to inner surfaces of the left and the right cover members.

According to another preferred aspect, at least of upper and lower edges of the left and the right side wall sections are coupled together by a cross member extending in a vehicle-width direction.

In order to provide a motorcycle which can restrict the size of a body frame in a vehicle-width direction from increasing and enhance frame rigidity, the description above describes a body frame 2 including a head pipe 3 and left and right front frame sections 12, 12 extending from the head pipe 3, the left and the right front frame sections 12 having left and right side wall sections 12a, 12a extending in a longitudinal direction of a vehicle and in a vertical direction, and the left and the right side wall sections 12a, 12a being disposed on the left and right sides of the engine unit 7.

## Claims

1. Motorcycle comprising a body frame (2) and an engine unit (7) fixed to the body frame (2), the body frame (2) including a head pipe (3) and left and right frame sections (12) extending from the head pipe (3), wherein
the left and the right frame sections (12) include left and right side wall sections (12a) extending in a longitudinal direction and/or in a vertical direction of the motorcycle, and the left and the right side wall sections (12a) are disposed on left and right sides of the engine unit (7) and have at least a portion which overlaps at least a portion of the engine unit (7) when viewed from a lateral side of the motorcycle,
**characterized in that**
left and right upper suspension boss sections (12m) are formed at upper rear end edges of the left and right side wall sections (12a),
upper suspension sections (7d) formed on an upper wall of a crankcase of the engine unit (7) are connected to the left and the right upper suspension boss sections (12m) by bolts (76),
left and right lower suspension boss sections (12n) are formed at lower rear end edges of the left and the right side wall sections (12a), and
lower suspension sections (7e) formed on a bottom wall of the crankcase of the engine unit (7) are connected to the left and the right lower suspension boss sections (12n) by pairs of front and rear bolts (77).

2. Motorcycle according to claim 1, wherein the left and right side wall sections (12a) comprise at least a lateral surface which borders the left and right side wall sections (12a) in width direction of the motorcycle, respectively, and which is substantially flat.

3. Motorcycle according to claim 1 or 2, wherein rear portions of the left and the right side wall sections (12a) cover at least a portion of a cylinder head (7c) of the engine unit (7) from the left and/or the right side, and wherein upper and lower edges (12a',12a") of the left and the right side wall sections (12a) are respectively positioned above and below the cylinder head (7c) of the engine unit (7) when viewed from the lateral side of the motorcycle.

4. Motorcycle according to one of the claims 1 to 3, wherein portions in proximity to upper and lower edges (12a', 12a") of a rear end of the left and right side wall sections (12a) are connected to the engine unit (7).

5. Motorcycle according to one of the claims 1 to 4, wherein a plurality of ribs (12f-12k) extending inwardly in width direction of the motorcycle are formed on the left and the right side wall sections (12a).

6. Motorcycle according to claim 5, wherein the ribs (12f-12k) include upper and lower edge ribs (12f,12g) respectively extending inwardly in width direction of the motorcycle from upper and lower edges (12a',12a") of the left and the right side wall sections (12a), the upper edge rib (12f) being formed longer than the lower edge rib (12g).

7. Motorcycle according to one of the claims 1 to 6, wherein the left and the right side wall sections (12a) have at least an opening (12d,12e), and at least a peripheral edge rib (12j,12k) extending inwardly in width direction of the motorcycle is formed on the periphery of the opening (12d,12e).

8. Motorcycle according to one of the claims 1 to 7, wherein front portions of the left and the right side wall sections (12a) positioned in moving direction of the motorcycle forward of a cylinder head (7c) of the engine unit (7) cover at least a portion of an air cleaner (24) of an intake system, which is connected to the cylinder head (7c), from the left and/or the right side.

9. Motorcycle according to claim 8, wherein in the front portions of the left and the right side wall sections (12a), upper and lower ribs (12h,12i) are formed respectively extending inwardly in width direction of the motorcycle from upper edges and lower edges (12a',12a") of the front portions and further extending upwardly and downwardly from inner edges thereof.

10. Motorcycle according to one of the claims 1 to 9, wherein connecting portions of the left and the right side wall sections (12a) connected to the head pipe (3) have top and bottom wall sections (12b,12c) respectively extending inwardly in width direction of the motorcycle from upper edges and lower edges (12a',12a") of the left and the right side wall sections (12a), the connecting portions being formed in a generally cylindrical shape in lateral cross section.

11. Motorcycle according to one of the claims 1 to 10, wherein the head pipe (3) and/or the left and the right frame sections (12) are formed by casting.

12. Motorcycle according to one of the claims 1 to 11, wherein the head pipe (3) includes left and right head pipe halves (3a) integrally formed with the left and the right frame sections (12), the left and right head pipe halves (3a) being coupled together by bolts (69), wherein left and right first coupling boss sections (3b) and second coupling boss sections (3c) are formed respectively on front and rear edges of the left and right head pipe halves (3a) so as to be coupled together by the bolts (69).

13. Motorcycle according to claim 12, wherein third coupling boss sections (3d) are formed at portions spaced rearwardly in moving direction of the motorcycle from the second coupling boss sections (3c) of the left and right side wall sections (12a) and coupled together by at least a further bolt (69) such that portions from the third coupling boss sections (3d) of the left and the right side wall sections (12a) to the head pipe (3) form a generally square cylindrical shape in lateral cross section.

14. Motorcycle according to one of the claims 1 to 13, wherein left and right cover members (16) are disposed on sides of the left and the right side wall sections (12a), a space between the left and the right side wall sections (12a) and the left and the right cover members (16) being defined as wind introduction passage for introducing a headwind to the engine unit (7), wherein at least a wind introduction member (75) for guiding said headwind introduced into the wind introduction passage to the engine unit is disposed in said space between the left and the right side wall sections (12a) and the left and the right cover members (16), said wind introduction member (75) being attached to inner surfaces of the left and the right cover members (16).

15. Motorcycle according to one of the claims 1 to 14, wherein upper and lower edges (12a',12a") of the left and the right side wall sections (12a) are coupled together by at least a cross member (60,72) extending in width direction of the motorcycle, and wherein the engine unit (7) is fixed to the body frame (2) such that an axis of a cylinder of said engine unit (7) is directed generally horizontally, wherein footrests are disposed on the left and right sides of said cylinder.

## Patentansprüche

1. Motorrad, aufweisend einen Karosserierahmen (2) und eine Motoreinheit (7), befestigt an dem Karosserierahmen (2), wobei der Karosserierahmen (2) ein Kopfrohr (3) und linke und rechte Rahmenabschnitte (12) enthält, die sich von dem Kopfrohr (3) erstrecken, wobei
der linke und rechte Rahmenabschnitt (12) linke und rechte Seitenwandabschnitte (12a) enthält, die sich in einer Längsrichtung und / oder einer vertikalen Richtung des Motorrades erstrecken, und wobei die linken und rechten Seitenwandabschnitte (12a) auf der linken und rechten Seite der Motoreinheit (7) angeordnet sind und zumindest einen Abschnitt haben, der zumindest einen Abschnitt der Motoreinheit (7) überlappt, wenn von einer seitlichen Seite des Motorrades gesehen,
**dadurch gekennzeichnet, dass**
linke und rechte obere Aufhängungs- Nabenabschnitte (12m) an oberen hinteren Endkanten der linken und rechten Seitenwandabschnitte (12a) gebildet sind, obere Aufhängungsabschnitte (7d), gebildet an einer oberen Wand eines Kurbelgehäuses der Motoreinheit (7), mit den linken und rechten oberen Aufhängungs-Nabenabschnitten (12m) durch Schrauben (76) verbunden sind,
linke und rechte untere Aufhängungs- Nabenabschnitte (12n) an unteren hinteren Endkanten der linken und rechten Seitenwandabschnitte (12a) gebildet sind, und untere Aufhängungsabschnitte (7e), gebildet an einer Bodenwand des Kurbelgehäuses der Motoreinheit (7), mit den linken und rechten unteren Aufhängungs-Nabenabschnitten (12n) durch Paare von vorderen und hinteren Schrauben (77) verbunden sind.

2. Motorrad nach Anspruch 1, wobei der linke und rechte Seitenwandabschnitt (12a) zumindest eine seitliche Oberfläche aufweist, die die linken und rechten Seitenwandabschnitte (12a) jeweils in Richtung der Breite des Motorrades begrenzen, und der im Wesentlichen flach ist.

3. Motorrad nach Anspruch 1 oder 2, wobei hintere Abschnitte der linke und rechte Seitenwandabschnitte (12a) zumindest einen Abschnitt eines Zylinderkopfes (7c) der Motoreinheit (7) von der linken und / oder rechten Seite abdecken und wobei obere und untere Kanten (12a', 12a") der linke und rechte Seitenwandabschnitte (12a) jeweils oberhalb und unterhalb des Zylinderkopfes (7c) der Motoreinheit (7) positioniert sind, wenn von der seitlichen Seite des Motorrades gesehen.

4. Motorrad nach einem der Ansprüche 1 bis 3, wobei Abschnitte in der Nähe zu oberen und unteren Kanten (12a', 12a") eines hinteren Endes der linken und rechten Seitenwandabschnitte (12a) mit der Motoreinheit (7) verbunden sind.

5. Motorrad nach einem der Ansprüche 1 bis 4, wobei sich eine Mehrzahl von Rippen (12f-12k) nach innen in Richtung der Breite des Motorrades erstrecken und an den linken und rechten Seitenwandabschnitten (12a) gebildet sind.

6. Motorrad nach Anspruch 5, wobei sich die Rippen (12f, 12g) jeweils nach innen in Richtung der Breite des Motorrades von oberen und unteren Kanten (12a', 12a") der linken und rechten Seitenwandabschnitte (12a) erstrecken, wobei die Kantenrippe (12f) länger als die untere Kantenrippe (12g) gebildet ist.

7. Motorrad nach einem der Ansprüche 1 bis 6, wobei die linken und rechten Seitenwandabschnitte (12a) zumindest eine Öffnung (12d, 12e) haben und zumindest eine Umfangskantenrippe (12j, 12k), die sich nach innen in Richtung der Breite des Motorrades erstreckt, an dem Umfang der Öffnung (12d, 12e) gebildet ist.

8. Motorrad nach einem der Ansprüche 1 bis 7, wobei vordere Abschnitte der linken und rechten Seitenwandabschnitte (12a), positioniert in Bewegungsrichtung des Motorrades nach vorn eines Zylinderkopfes (7c) der Motoreinheit (7), zumindest einen Abschnitt eines Luftfilters (24) eines Einlasssystems von der linken und / oder rechten Seite abdecken, der mit dem Zylinderkopf (7c) verbunden ist.

9. Motorrad nach Anspruch 8, wobei die vorderen Abschnitte der linken und rechten Seitenwandabschnitte (12a), obere und untere Rippen (12h, 12i) gebildet sind, die sich jeweils nach innen in Richtung der Breite des Motorrades von oberen und unteren Kanten (12a', 12a") der ersten Abschnitte erstrecken und sich außerdem nach oben und nach unten von inneren Kanten derselben erstrecken.

10. Motorrad nach einem der Ansprüche 1 bis 9, wobei Verbindungsabschnitte der linken und rechten Seitenwandabschnitte (12a), verbunden mit dem Kopfrohr (3), Spitzen- und Boden- Wandabschnitte (12b, 12c) haben, die sich jeweils nach innen in Richtung der Breite des Motorrades von oberen und unteren Kanten (12a', 12a") der linken und rechten Seitenwandabschnitte (12a) erstrecken, wobei die Verbindungsabschnitte in einer im Wesentlichen zylindrischen Form im Seitenquerschnitt gebildet sind.

11. Motorrad nach einem der Ansprüche 1 bis 10, wobei das Kopfrohr (3) und / oder die linken und rechten Rahmenabschnitte (12) durch Gießen gebildet sind.

12. Motorrad nach einem der Ansprüche 1 bis 11, wobei das Kopfrohr (3) linke und rechte Kopfrohrhälften (3a), einstückig mit den linken und rechten Rahmenabschnitten (12) gebildet, enthält, wobei die linken und rechten Kopfrohrhälften (3a) durch Schrauben (69) zusammengekuppelt sind, wobei erste linke und rechte Kupplungsnabenabschnitte (3b) und zweite Kupplungsnabenabschnitte (3c) jeweils an vorderen und hinteren Kanten der linken und rechten Kopfrohrhälften (3a) gebildet sind, um durch Schrauben (69) zusammengekuppelt zu sein.

13. Motorrad nach Anspruch 12, wobei dritte Kupplungsnabenabschnitte (3d) an Abschnitten nach hinten in Bewegungsrichtung des Motorrades von dem zweiten Kupplungsnabenabschnitt (3c) der linken und rechten Seitenwandabschnitte (12a) gebildet sind und durch zumindest eine weitere Schraube (69) derart gekuppelt sind, dass Abschnitte von dem dritten Kupplungsnabenabschnitt (3d) der linken und rechten Seitenwandabschnitte (12a) an dem Kopfrohr (3) eine im Wesentlichen quadratische zylindrische Form im Seitenquerschnitt bilden.

14. Motorrad nach einem der Ansprüche 1 bis 13, wobei linke und rechte Abdeckteile (16) auf Seiten der linken und rechten Seitenwandabschnitte (12a) angeordnet sind, ein Raum zwischen den linken und rechten Seitenwandabschnitte (12a) und den linken und rechten Abdeckteilen (16) als ein Windeinleitungskanal zum Einleiten eines Gegenwindes zu der Motoreinheit (7) gebildet ist, wobei zumindest ein Windeinleitungsteil (75) zum Führen des Gegenwindes, eingeleitet in den Windeinleitungskanal zu der Motoreinheit (7), in dem Raum zwischen den linken und rechten Seitenwandabschnitten (12a) und den linken und rechten Abdeckteilen (16) angeordnet ist, wobei das Windeinleitungsteil (75) mit inneren Oberflächen der linken und rechten Abdeckteile (16) verbunden ist.

15. Motorrad nach einem der Ansprüche 1 bis 14, wobei obere und untere Kanten (12a', 12a") der linken und rechten Seitenwandabschnitte (12a) durch zumindest ein Querteil (60, 72), das in Richtung der Breite des Motorrades erstreckt, zusammengekuppelt sind und wobei die Motoreinheit (7) an dem Karosserierahmen (2) derart befestigt ist, dass eine Achse eines Zylinders der Motoreinheit (7) im Wesentlichen horizontal ausgerichtet ist, wobei Fußstützen auf der linken und rechten Seite des Zylinders angeordnet sind.

## Revendications

1. Motocyclette comprenant un cadre (2) et une unité de moteur (7) fixée au cadre (2), le cadre (2) comprenant un tube de tête (3) et des sections de cadre gauche et droite (12) s'étendant à partir du tube de tête (3), dans laquelle :
- les sections de cadre gauche et droite (12) comprennent des sections de parois latérales gauche et droite (12a) s'étendant dans une direction longitudinale et/ou dans une direction verticale de la motocyclette et les sections de parois latérales gauche et droite (12a) sont disposées sur les côtés gauche et droit de l'unité de moteur (7) et comportent au moins une partie qui recouvre au moins une partie de l'unité de moteur (7) lorsqu'elle est vue depuis un côté latéral de la motocyclette,
- **caractérisée en ce que** :
- des sections de bossages supérieurs de suspension gauche et droite (12m) sont formées aux bords d'extrémité supérieure arrière des sections de parois latérales gauche et droite (12a),
- des sections supérieures de suspension (7d) formées sur une paroi supérieure d'un carter de vilebrequin de l'unité de moteur (7) sont connectées aux sections de bossages supérieurs de suspension gauche et droite (12m) par des boulons (76),
- des sections de bossages inférieurs de suspension gauche et droite (12n) sont formées aux bords d'extrémité inférieure arrière des sections de parois latérales gauche et droite (12a), et
- des sections inférieures de suspension (7e) formées sur une paroi inférieure du carter de vilebrequin de l'unité de moteur (7) sont connectées aux sections de bossages inférieurs de suspension gauche et droite (12n) par des paires de boulons avant et arrière (77).

2. Motocyclette selon la revendication 1, dans laquelle les sections de parois latérales gauche et droite (12a) comprennent au moins une surface latérale qui borde les sections de parois latérales gauche et droite (12a) dans la direction de la largeur de la motocyclette, respectivement, et qui est sensiblement plane.

3. Motocyclette selon les revendications 1 ou 2, dans laquelle des parties arrière des sections de parois latérales gauche et droite (12a) couvrent au moins une partie d'une culasse (7c) de l'unité de moteur (7) à partir du côté gauche et/ou droit et dans laquelle des bords supérieur et inférieur (12a', 12a") des sections de parois latérales gauche et droite (12a) sont positionnés respectivement au-dessus et au-dessous de la culasse (7c) de l'unité de moteur (7) lorsqu'ils sont vus depuis un côté latéral de la motocyclette.

4. Motocyclette selon l'une des revendications 1 à 3, dans laquelle des parties à proximité des bords supérieur et inférieur (12a', 12a") d'une extrémité arrière des sections de parois latérales gauche et droite (12a) sont connectées à l'unité de moteur (7).

5. Motocyclette selon l'une des revendications 1 à 4, dans laquelle une pluralité de nervures (12f à 12k) s'étendant vers l'intérieur dans la direction de la largeur de la motocyclette sont formées sur les sections de parois latérales gauche et droite (12a).

6. Motocyclette selon la revendication 5, dans laquelle les nervures (12f à 12k) comprennent des nervures de bords supérieur et inférieur (12f, 12g) s'étendant respectivement vers l'intérieur dans la direction de la largeur de la motocyclette à partir des bords supérieur et inférieur (12a', 12a") des sections de parois latérales gauche et droite (12a), la nervure de bord supérieur (12f) étant formée plus longue que la nervure de bord inférieur (12g).

7. Motocyclette selon l'une des revendications 1 à 6, dans laquelle les sections de parois latérales gauche et droite (12a) comportent au moins une ouverture (12d, 12e) et au moins une nervure de bord périphérique (12j, 12k) s'étendant vers l'intérieur dans la direction de la largeur de la motocyclette est formée sur la périphérie de l'ouverture (12d, 12e).

8. Motocyclette selon l'une des revendications 1 à 7, dans laquelle des parties avant des sections de parois latérales gauche et droite (12a) positionnées dans la direction de déplacement de la motocyclette en avant de la culasse (7c) de l'unité de moteur (7) couvrent au moins une partie d'un filtre à air (24) d'un système d'admission, qui est connecté à la culasse (7c), à partir du côté'gauche et/ou droit.

9. Motocyclette selon la revendication 8, dans laquelle, dans les parties avant des sections de parois latérales gauche et droite (12a), des nervures supérieure et inférieure (12h, 12i) sont formées respectivement s'étendant vers l'intérieur dans la direction de la largeur de la motocyclette à partir des bords supérieurs et des bords inférieurs (12a', 12a") des parties avant et s'étendant en outre vers le haut et vers le bas à partir de bords intérieurs de ceux-ci.

10. Motocyclette selon l'une des revendications 1 à 9, dans laquelle des parties de connexion des sections de parois latérales gauche et droite (12a) connectées au tube de tête (3) comportent des sections de parois supérieure et inférieure (12b, 12c) s'étendant respectivement vers l'intérieur dans la direction de la largeur de la motocyclette à partir des bords supérieurs et des bords inférieurs (12a', 12a") des sections de parois latérales gauche et droite (12a), les parties de connexion étant conformées en une forme généralement cylindrique en coupe transversale latérale.

11. Motocyclette selon l'une des revendications 1 à 10, dans laquelle le tube de tête (3) et/ou les sections de cadre gauche et droite (12) sont formés par coulage.

12. Motocyclette selon l'une des revendications 1 à 11, dans laquelle le tube de tête (3) comprend des demi-tubes de tête gauche et droit (3a) formés intégralement avec les sections de cadre gauche et droite (12), les demi-tubes de tête gauche et droit (3a) étant accouplés ensemble par des boulons (69), dans laquelle des premières sections de bossage d'accouplement gauche et droite (3b) et des deuxièmes sections de bossage d'accouplement (3c) sont formées respectivement sur des bords avant et arrière des demi-tubes de tête gauche et droit (3a) de façon à être accouplées ensemble par les boulons (69).

13. Motocyclette selon la revendication 12, dans laquelle des troisièmes sections de bossage d'accouplement (3d) sont formées à des parties espacées vers l'arrière dans la direction de déplacement de la motocyclette à partir des deuxièmes sections de bossage d'accouplement (3c) des sections de parois latérales gauche et droite (12a) et accouplées ensemble par au moins un autre boulon (69), de sorte que les parties à partir des troisièmes sections de bossage d'accouplement (3d) des sections de parois latérales gauche et droite (12a) jusqu'au tube de tête (3) forment une forme généralement cylindrique carrée en coupe transversale latérale.

14. Motocyclette selon l'une des revendications 1 à 13, dans laquelle des éléments de couverture gauche et droit (16) sont disposés sur des côtés des sections de parois latérales gauche et droite (12a), un espace entre les sections de parois latérales gauche et droite (12a) et les éléments de couverture gauche et droit (16) étant défini comme passage d'introduction du vent pour introduire le vent de face vers l'unité de moteur (7), dans laquelle au moins un élément d'introduction de vent (75) pour guider ledit vent de face introduit dans le passage d'introduction de vent jusqu'à l'unité de moteur est disposé dans ledit espace entre les sections de parois latérales gauche et droite (12a) et les éléments de couverture gauche et droit (16), ledit élément d'introduction de vent (75) étant fixé aux surfaces intérieures des éléments de couverture gauche et droit (16).

15. Motocyclette selon l'une des revendications 1 à 14, dans laquelle les bords supérieur et inférieur (12a', 12a") des sections de parois latérales gauche et droite (12a) sont accouplés ensemble par au moins une traverse (60, 72) s'étendant dans la direction de la largeur de la motocyclette, dans laquelle l'unité de moteur (7) est fixée au cadre (2) de sorte qu'un axe d'un cylindre de ladite unité de moteur (7) soit dirigé généralement horizontalement et dans laquelle des repose-pieds sont disposés sur les côtés gauche et droit dudit cylindre.
